# EUROPEAN PATENT APPLICATION

(11) **EP 4 783 504 A1**
(43) Date of publication of application: **29.07.2026**
(21) Application number: 23952475.4
(22) Date of filing: 18.09.2023
(51) Int. Cl.: H04L 5/00

(54) **TRANSMISSION METHOD, APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guanggdong 523860 (CN); ZHANG, Yi, Dongguan, Guanggdong 523860 (CN)
(74) Representative: Novagraaf Technologies
(86) International application number: PCT/CN2023/119480
(87) International publication number: WO 2025/059809

(57) **Abstract**

Provided is a transmission method, relating to the technical field of communications. The method is performed by a terminal, and includes: detecting (210) at least one information format on a first channel, the at least one information format comprising a first information format; wherein the first information format supports carrying data information, and the first channel supports carrying control information, the control information being used to indicate a second channel or a terminal-specific parameter.

## Description

### TECHNICAL FIELD

Embodiments of the present disclosure relate to the technical field of communications, and in particular, relate to a transmission method and apparatus, and a device and a storage medium thereof.

### RELATED ART

Downlink data transmission is essential to cellular network communication systems. In the related arts, downlink data transmission supports dynamic scheduling and semi-persistent scheduling (SPS).

In dynamic scheduling, a terminal receives downlink control information (DCI) from a base station, and receives downlink data based on parameters within the DCI.

Regarding ultra-reliable and low latency communications (URLLC) services in some industrial control scenarios, although the data volume (payload) of a single transmission is relatively small, stringent requirements are imposed on reliability and latency. For example, the latency needs to reach 0.1 ms, and the reliability needs to reach 99.99999%. Dynamic scheduling in the related arts fails to satisfy the latency requirements of such URLLC services.

### SUMMARY

Embodiments of the present disclosure provide a transmission method and apparatus, and a device and a storage medium thereof.

According to an aspect of the embodiments of the present disclosure, a transmission method is provided. The method includes:
detecting at least one information format on a first channel, the at least one information format including a first information format;
wherein the first information format supports carrying data information, and the first channel supports carrying control information, the control information being used to indicate a second channel or a terminal-specific parameter.

According to another aspect of the embodiments of the present disclosure, a transmission method is provided. The method includes:
transmitting at least one information format on a first channel, the at least one information format including a first information format;
wherein the first information format supports carrying data information, and the first channel supports carrying control information, the control information being used to indicate a second channel or a terminal-specific parameter.

According to another aspect of the embodiments of the present disclosure, a transmission method is provided. The method includes:
detecting at least one information format on a first channel, the at least one information format including a first information format; wherein the first information format supports carrying data information, and the first channel supports carrying control information, the control information being used to indicate a second channel or a terminal-specific parameter.

According to another aspect of the embodiments of the present disclosure, a transmission method is provided. The method includes:
transmitting at least one information format on a first channel, the at least one information format including a first information format;
wherein the first information format supports carrying data information, and the first channel supports carrying control information, the control information being used to indicate a second channel or a terminal-specific parameter.

According to an aspect of the embodiments of the present disclosure, a terminal is provided. The terminal includes a processor; a transceiver communicably connected to the processor; and a memory configured to store one or more computer instructions executable by the processor. The terminal is configured to perform the above transmission method.

According to an aspect of the embodiments of the present disclosure, a network device is provided. The network device includes a processor; a transceiver communicably connected to the processor; and a memory configured to store one or more computer instructions executable by the processor. The network device is configured to perform the above transmission method.

According to an aspect of the embodiments of the present disclosure, a computer-readable storage medium is provided. The computer-readable storage medium includes one or more computer programs. The one or more computer programs, when run by a processor, cause the processor to perform the above transmission method.

According to an aspect of the embodiments of the present disclosure, a computer program product is provided. The computer program product includes one or more computer instructions stored in a computer-readable storage medium. The one or more computer instructions, when called and executed by a processor of a computer device, cause the computer device to perform the above transmission method.

According to an aspect of the embodiments of the present disclosure, a chip is provided. The chip includes programmable electric logic circuitry and/or one or more program instructions, and the chip, when running, is configured to perform the above transmission method.

According to an aspect of the embodiments of the present disclosure, a computer program is provided. The computer program includes one or more computer instructions executed by a processor to cause a computer device to perform the above transmission method.

The technical solutions according to the embodiments of the present disclosure achieve the following benefits:

By carrying, using the first information format, the data information on the first channel which is a channel that supports carrying the control information, the method according to the embodiments of the present disclosure simplifies the two-step transmission scheme of "DCI scheduling first, then data transmission" in the related art into a one-step transmission scheme. For example, in a case where the information of the first information format is the DCI, the downlink data may be directly transmitted using the DCI, such that transmission latency is reduced, and thus the requirements of the URLLC service are satisfied.

### BRIEF DESCRIPTION OF DRAWINGS

For clearer descriptions of the technical solutions according to the embodiments of the present disclosure, the following briefly illustrates drawings required for the description of the embodiments. Obviously, the illustrated drawings below are only some embodiments of the present disclosure. For ordinary persons skilled in the art, other drawings may be obtained based on these drawings without the premise of creative efforts.
FIG. 1 is a schematic diagram of a scenario for a communication system according to some embodiments of the present disclosure;
FIG. 2 is a schematic flowchart of a transmission method according to some embodiments of the present disclosure;
FIG. 3 is a reception timing diagram for a first information format according to some embodiments of the present disclosure;
FIG. 4 is a schematic flowchart of a transmission method according to some embodiments of the present disclosure;
FIG. 5 is a schematic transmission diagram for a first information format according to some embodiments of the present disclosure;
FIG. 6 is a block diagram of a transmission apparatus according to some embodiments of the present disclosure;
FIG. 7 is a block diagram of a transmission apparatus according to some embodiments of the present disclosure; and
FIG. 8 is a schematic structural diagram of a communication system according to some embodiments of the present disclosure.

### DETAILED DESCRIPTION

For clearer descriptions of the objectives, technical solutions and advantages of the present disclosure, the embodiments of the present disclosure are described hereinafter in combination with the accompanying drawings. When the following description refers to the drawings, unless indicated otherwise, the same numerals in different drawings represent the same or similar elements. The implementations described in the following exemplary embodiments do not represent all implementations consistent with the present disclosure. Rather, the implementations are merely examples of devices and methods consistent with some aspects of the present disclosure as detailed in the appended claims.

The technical terms used in the present disclosure are merely intended to describe particular embodiments and do not limit the scope of the present disclosure. The singular forms of the terms "a," "an," and "the" used herein and in the appended claims include their plural forms as well unless the context clearly indicates otherwise. Furthermore, it should be understood that the term "and/or" used herein indicates and encompasses any and all possible combinations of one or a plurality of associated listed elements.

It should be understood that, although the terms "first," "second," "third," and the like may be used herein to describe various information, they are not intended to limit the information. These terms are merely used to distinguish one category of information from another. For instance, without leaving the scope of the present disclosure, a first parameter may be referred to as a second parameter, similarly; the second parameter may also be referred to as the first parameter. Depending on the context, the term "if" may be interpreted as "when" or "upon" or "in response to determining."

Cellular network communication systems generally support two schemes of downlink data transmission:

### 1. Dynamic scheduling

In dynamic scheduling, DCI is transmitted by a base station and received by a terminal. The terminal receives the downlink data transmission based on a parameter in the DCI. Dynamic scheduling is efficient in transmission due to having the advantage of determining the transmission parameter based on real-time traffic volume and the conditions of a physical channel. A processing latency on the terminal side includes demodulating both the DCI and the downlink data.

### 2. Semi-persistent scheduling

In semi-persistent scheduling, a higher layer signaling (e.g., a radio resource control (RRC)) is transmitted by a base station and received by a terminal. The terminal receives the downlink data transmission based on a parameter in the higher layer signaling. Regarding cycle completion, data with constant traffic volume and stable data transmission conditions, using semi-persistent scheduling may decrease a downlink control signaling overhead, thereby simplifying reception processing at the terminal.

In a New Radio (NR) system, a physical downlink control channel (PDCCH) carries the DCI for a user equipment (UE) transmitted by a base station. The DCI of different UEs is multiplexed and transmitted over the PDCCH. The UE needs to perform blind detection on the PDCCH to determine whether the current PDCCH contains DCI to be transmitted to the UE itself.

An NR PDCCH may support various DCI formats and aggregation levels. Different DCI formats correspond to different payload sizes. Different aggregation levels represent that the numbers of physical resources occupied by the DCI are different. The numbers of DCI formats and aggregation levels pending for detection affect the number of blind detections. The more blind detections from the UE, the greater the power consumption, resulting in a longer latency.

NR DCI uses polar coding, and an information bit length supported by polar codes is constrained by an interleaving matrix within an encoder. In an NR system, the design supports an interleaving matrix with a maximum interleaving length of 164 bits. That is, in the NR system, DCI bits and cyclic redundancy check (CRC) bits transmitted over the PDCCH together do not exceed 164 bits; and the information bits of the DCI do not exceed 140 bits upon removal of 24 bits of the CRC.

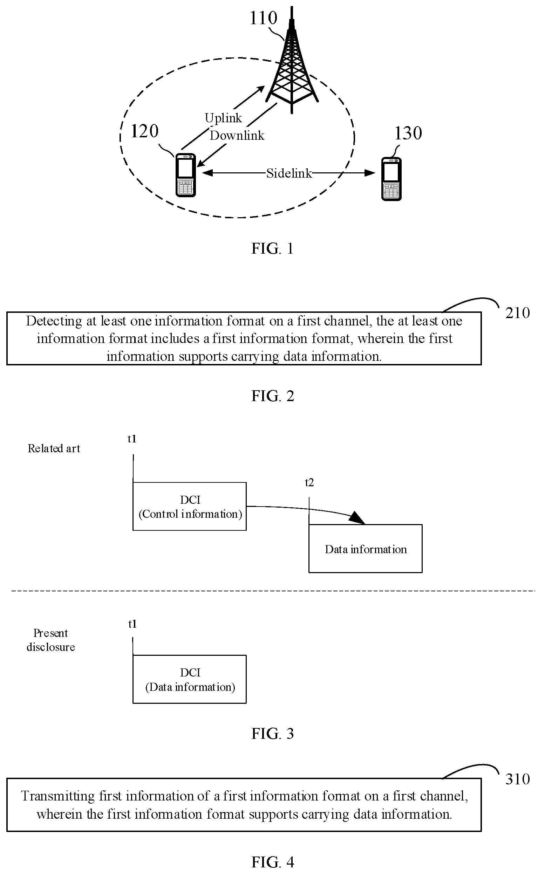

FIG. 1 is a schematic diagram of a wireless communication system according to some embodiments of the present disclosure. The wireless communication system includes a network device 100 and a terminal 120, and/or a terminal 120 and a terminal 130, which is not limited in the present disclosure.

The network device 110 in the present disclosure provides wireless communication functions. The network device includes but is not limited to: an evolved NodeB (eNB), a radio network controller (RNC), a NodeB (NB), a base station controller (BSC), a base transceiver station (BTS), a home base station (e.g., a home evolved NodeB, or a home NodeB, HNB), a baseband unit (BBU), an access point (AP) in a wireless fidelity (Wi-Fi) system, a wireless relay node, a wireless backhaul node, a transmission point (TP) or a transmission and reception point (TRP), or the like. It may also be a next generation NodeB (gNB) or a transmission reception point (a TRP or a TP) in a 5^{th} generation (5G) mobile communication system, or one or a set of antenna panels (including a plurality of antenna panels) of a base station in the 5G system, or a network node constituting a gNB or a transmission point, such as a baseband unit (BBU) or a distributed unit (DU), or the like, or a base station in a beyond 5^{th} generation (B5G), a 6^{th} generation (6G) mobile communication system, or the like, or a core network (CN), a fronthaul, a backhaul, a radio access network (RAN), a network slice, or the like, or a serving cell, a primary cell (PCell), a primary secondary cell (PSCell), a special cell (SpCell), a secondary cell (SCell), a neighboring cell, or the like, of the terminal.

The terminal 120 and/or terminal 130 in the present disclosure may be implemented as or referred to as a user equipment (UE), an access terminal, a subscriber unit, a subscriber station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal 120 communicate with each other using some interface technology, such as a Uu interface.

In some embodiments, two communication scenarios are present between the network device 110 and the terminal 120: an uplink communication scenario and a downlink communication scenario. The uplink communication refers to transmitting signals to the network device 110; and the downlink communication refers to transmitting signals to the terminal 120.

The terminal 120 and the terminal 120 communicate with each other using some direct communication interface, such as the PC5 interface. This way, the terminal 120 and the terminal 130 perform a sidelink communication scenario.

Both the terminal device 120 and the terminal device 130 are within a network coverage and located in the same cell, or both the terminal device 120 and the terminal device 130 are within the network coverage but located in different cells, or the terminal device 120 is within the network coverage but the terminal device 130 is outside the network coverage.

The technical solutions according to the embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long-term evolution (LTE) system, an LTE frequency-division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a nonterrestrial network (NTN) system, a wireless local area network (WLAN) system, a wireless fidelity (Wi-Fi) system, a cellular Internet of things system, a cellular passive Internet of things system, and may also be applied to the subsequent evolution systems of 5G NR system, and may also be applied to B5G, 6G, and subsequent evolution systems. In some embodiments of the present disclosure, "NR" may also be referred to as 5G NR system or 5G system. The 5G mobile communication system may include non-standalone (NSA) and/or standalone (SA).

The technical solutions according to the embodiments of the present disclosure may also be applied to a machine-type communications (MTC) network, a long term evolution-machine (LTE-M) network, a device-to-device (D2D) communications network, a machine-to-machine (M2M) communications network, an Internet of things (IoT) network, or other networks. The IoT network may include an Internet of vehicles. The communication methods in the Internet of vehicles system are collectively referred to as vehicle to X (V2X, X may represent anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

The wireless communication system according to the embodiments of the present disclosure may be used in but is not limited to at least one of: an uplink communication scenario, a downlink communication scenario, a sidelink communication scenario, and the like communication scenarios.

It should be noted that some terms used in the present disclosure may be understood as equivalents, have similar descriptions, or represent descriptions of a lower degree. For example:

The term "information format" may be substituted for any one of: "format," "control signaling format," "control format," "information combination format," and the like descriptions.

The term "data information" may be substituted for any one of: "data," "downlink data," "sidelink data," "data information field," and the like descriptions.

The term "control information" may be substituted for any one of: "control signaling," "control field," "control information element," "control information field," and the like descriptions.

FIG. 2 is a schematic flowchart for a transmission method according to some embodiments of the present disclosure. The method is performed by a terminal, and includes at least some of the following steps:

**In 210,** at least one information format is detected on a first channel, wherein the at least one information format includes a first information format. The first information format supports carrying data information.

The first channel supports carrying control information. In some embodiments, the first channel is a control channel. Exemplarily, in the downlink transmission scenario, the first channel is the PDCCH; and in the sidelink transmission scenario, the first channel is a physical sidelink control channel (PSCCH). In the embodiments of the present disclosure, the first channel is considered as the PDCCH.

The terminal detects at least one information format on a first channel, wherein the information format is an information format of first information. In some embodiments, the information format is an information format of control signaling. One or several types of information formats are available for the control signaling. Optionally, the different information formats correspond to different payload sizes. Optionally, the different information formats correspond to different aggregation levels.

Exemplarily, in the downlink transmission scenario, the information format is a DCI format, and one or several types of DCI formats may be present; and in the sidelink transmission scenario, the information format is a sidelink control information (SCI) format, and one or several types of SCI formats may be present.

In the embodiments of the present disclosure, the at least one information format includes the first information format, wherein the first information format supports carrying data information. This support for carrying data information may adopt one of the following two designs:

Design 1: The same information format is used for dynamically transmitting the data information and the control information.

The first information format supports carrying at least one of the data information or the control information. Based on transmission requirements of the service, the first information of the first information format may be dynamically configured for transmitting one of:
- data information;
- data information and control information; or
- control information.

Design 2: Different information formats are separately used for transmitting the data information and the control information.

For example, the first information format is used for transmitting the data information, and a second information format is used for transmitting the control information.

That the terminal detects at least one information format on the first channel may be equivalently understood as follows: The terminal blind detects at least one information format on the first channel. In some embodiments, the terminal is configured with several first channel candidates, and the terminal performs blind detection on each of the several first channel candidates for a presence of the first information of the first information format. Alternatively, this may be equivalently understood as follows: The terminal performs blind detection on the first channel according to at least one piece of information.

In a case where the first information of the first information format is detected on some first channel candidate, the terminal uses a scramble sequence corresponding to the terminal to descramble the first information. In a case where descrambling is successful, the terminal acquires information content carried by the first information; or in a case where descrambling fails, the terminal discards the first information. Exemplarily, the scramble sequence is a radio-network temporary identifier (RNTI) for the terminal, and the same terminal may possess one or several RNTIs.

In some embodiments, a search space corresponding to the several first channel candidates on which blind detection is performed, is determined based on a search space set and a control resource set (CORESET).

As illustrated in FIG. 3, using the DCI format as an example for the information format, the terminal in the related art receives the DCI at a time instant t1, the DCI carries control information, and the terminal receives the data information at a time instant t2 based on the control information; whereas the terminal according to the present disclosure receives the DCI at the time instant t1, and the DCI uses the first information format to directly carry the data information. Compared to the related art where the data information may be received at the time instant t2, the present disclosure may considerably reduce the latency.

In summary, by carrying, using the first information format, the data information on the first channel which is a channel that supports carrying the control information, the method according to the embodiments of the present disclosure simplifies the two-step transmission scheme of "DCI scheduling first, then data transmission" in the related art into a one-step transmission scheme. For example, in a case where the information of the first information format is the DCI, the downlink data may be directly transmitted via the DCI, such that the transmission latency is reduced, and thus the requirements of the URLLC service are satisfied.

FIG. 4 is a schematic flowchart of a transmission method according to some embodiments of the present disclosure. The method is performed by a network device, and the network device may be a base station. The method includes the following step:
**In 310**, first information in a first information format is transmitted on a first channel, wherein the first information format supports carrying data information.

The first channel supports carrying the control information. In some embodiments, the first channel is a control channel. Exemplarily, in a downlink transmission scenario, the first channel is a PDCCH; or in a sidelink transmission scenario, the first channel is a PSCCH. In the embodiments of the present disclosure, the first channel is considered as a PDCCH.

The network device transmits information of the first information format on the first channel, wherein the first information format is one of at least one information formats. In some embodiments, the information format is an information format of control signaling. One or several types of information formats may be available for the control signaling. Optionally, the different information formats correspond to different payload sizes. Optionally, the different information formats correspond to different aggregation levels.

Exemplarily, in the downlink transmission scenario, the information format is a DCI format, and one or several types of DCI formats may be present; and in the sidelink transmission scenario, the information format is a sidelink control information (SCI) format, and one or several types of SCI formats may be present.

In the embodiments of the present disclosure, the at least one information format includes the first information format, wherein the first information format supports carrying data information. This support for carrying data information may adopt one of the following two designs:

Design 1: The same information format is used for dynamically transmitting the data information and the control information.

The first information format supports carrying at least one of the data information or the control information. Based on transmission requirements of the service, the first information of the first information format may be dynamically configured for transmitting one of:
- data information;
- data information and control information; or
- control information.

Design 2: Different information formats are separately used for transmitting the data information and the control information.

For example, the first information format is used for transmitting the data information, and a second information format is used for transmitting the control information.

That the network device transmits the first information of the first information format on the first channel may be understood as follows: The network device transmits information of at least one information format on several first channel candidates, and at least one piece of first information of the first information format is present in each of the several first channel candidates transmitting the information of one information format.

In some embodiments, a search space corresponding to the several first channel candidates on which blind detection is performed is determined based on a search space set and a CORESET.

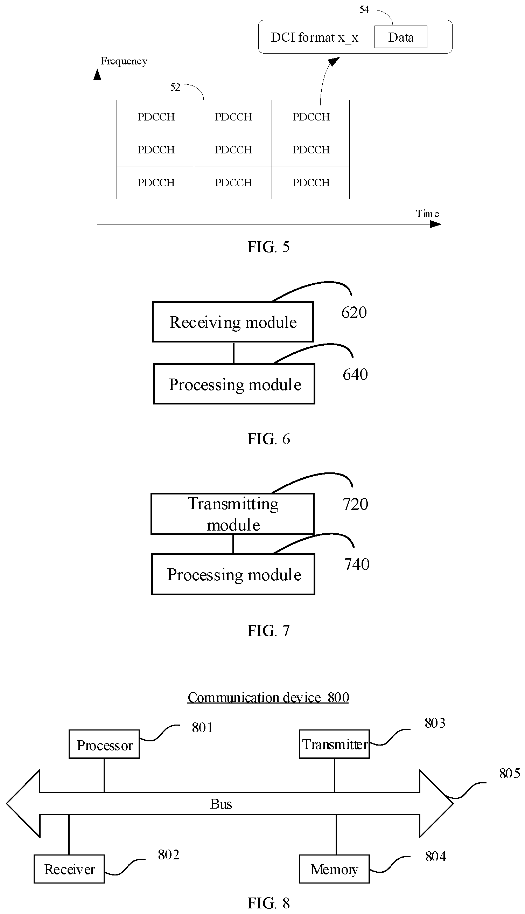

As exemplarily illustrated in FIG. 5, the PDCCH search space of the terminal 52 includes 9 PDCCH candidates, and the DCI of the first information format is transmitted on one of the PDCCH candidates, wherein the first information format is DCI format x_x, and the DCI carries downlink data 54.

In summary, by carrying, using the first information format, the data information on the first channel which is a channel that supports carrying the control information, the method according to the embodiments of the present disclosure simplifies the two-step transmission scheme of "DCI scheduling first, then data transmission" in the related art into a one-step transmission scheme. For example, in a case where the information of the first information format is the DCI, the downlink data may be directly transmitted using the DCI, such that transmission latency is reduced, and thus the requirements of the URLLC service are satisfied.

Based on optional embodiments illustrated in FIG. 2 and FIG. 4, the control information is used to indicate a second channel or to configure a terminal-specific parameter. Exemplarily, the second channel is a data channel.

In some embodiments, the second channel following the first channel includes at least one of:
- a start position on the second channel follows a start point on the first channel;
- a start position on the second channel follows an end point on the first channel;
- an end position on the second channel follows a start point on the first channel;
- an end position on the second channel follows an end point on the first channel;
- time units on the second channel follow time units on the first channel;
- a start position of a time unit on the second channel follows a start position of a time unit on the first channel;
- a start position of a time unit on the second channel follows an end position of a time unit on the first channel;
- an end position of a time unit on the second channel follows a start position of a time unit on the first channel;
- an end position of a time unit on the second channel follows an end position of a time unit on the first channel;
- a start position of a time unit on the second channel is not earlier than a start position of a time unit on the first channel;
- a start position of a time unit on the second channel is not earlier than an end position of a time unit on the first channel;
- an end position of a time unit on the second channel is not earlier than a start position of a time unit on the first channel; or
- an end position of a time unit on the second channel is not earlier than an end position of a time unit on the first channel;

The time unit includes at least one of a slot, a sub-frame, a sub-slot, N symbols, or a symbol. The granularity of the time units on the second channel may be the same or different from the granularity of the time units on the first channel. For example, the time units on the second channel are slots, whereas the time units on the first channel are symbols. As another example, the time units on the second channel are sub-frames, whereas the time units on the first channel are N slots.

In some embodiments, the terminal-specific parameter includes a resource configuration within a service cell or carrier, or a power control parameter of an uplink channel or signal. Optionally, the resource configuration within a service cell or carrier includes a TDD, an uplink/downlink time-domain resource configuration, a TDD uplink/downlink frequency-domain resource configuration, a valid transmission resource, an invalid transmission resource, a reserved resource, and the like.

**Regarding design 1 in the above embodiments: the first information is used for dynamically transmitting the data information and the control information:**
The terminal detects the first information format on the first channel. In a case where the first information is detected, the terminal determines whether the information carried by the first information format includes the data information and/or the control information determined based on predefined conditions. In design 1, in a case where a data volume of the data information and the control information is comparable, both may share the same information format to reduce the number of information formats for the UE upon performing blind detection, thereby reducing the power consumption of the UE and increasing the efficiency of the system.

In some embodiments, a payload size of the first information format is defined by a communication protocol or preconfigured by the network device.

In some embodiments, the first information format adopts a polar encoding, and the payload size of the first information format is less than or equal to than a first threshold. Exemplarily, the first threshold is 140.

The embodiments of the present disclosure provide at least two optional implementation schemes to implement the dynamic transmission of the data information and the control information. The order of the following description does not imply any ranking of superiority or inferiority.

### Optional implementation scheme 1 (explicitly indicate whether data information is carried):

The first information of the first information format includes second information, wherein the second information is used to indicate that the first information carries at least one of the data information or the control information.

In some embodiments, the terminal determines, based on an indication result of the second information, that the first information carries the data information and/or the control information. In some embodiments, the second information may be implemented by reusing a conventional information field, or be a new information field.

In a case where the second information reuses the conventional information field, and the first information format is configured to support carrying the data information, the second information is used to indicate that the first information carries the data information and/or the control information. In a case where the first information format is not configured to support carrying the data information, the second information is used to indicate other information. That is, in a case where the first information format is configured to support carrying the data information, the conventional information field is used to indicate that the first information carries the data information and/or the control information; or in a case where the first information format is not configured to support carrying the data information, the conventional information field is configured to indicate its original meaning.

For example, the second information reuses a conventional frequency-domain resource assignment (FDRA). In a case where the higher layer signaling configuration enables a function for the DCI to carry the data information, the first A bits of an FDRA field form the second information, the remaining (B-A) bits are still used for frequency-domain resource indication; or in a case where the higher layer signaling configuration disables the function for the DCI to carry the data information, all B bits in the FDRA field are used for frequency-domain resource indication.

The second information may be represented by one bit or several bits. Some scenarios are respectively described hereinafter.

### The second information is represented by one bit:

In some embodiments, the second information is represented by one bit. In a case where a value of the bit is a first value, the other bits of the first information carry the data information; or in a case where the value of the bit is a second value, the other bits of the first information do not carry the data information. Exemplarily, the first value is 1, and the second value is 0; or the first value is 0, and the second value is 1.

In a case where the first information (or other bits of the first information) carries the data information, the first information includes at least one of:
- data information of a second number of bits;
- data information of a second number of bits, and placeholder information of a third number of bits;
- data information of a second number of bits, and control information of a fourth number of bits; or
- data information of a second number of bits, control information of a fourth number of bits, and placeholder information of a fifth number of bits.
The second number, the third number, the fourth number, and the fifth number are all integers.

### The second number:

The second number is the number of bits occupied by the data information. In some embodiments, the second number satisfies at least one of the following conditions:
- the second number is defined by a communication protocol;
- the second number is configured by a network device;
- the second number is related to the largest number of bits of the control information carried by the first information;
- the second number is related to a bit length supported by an encoder;
- the second number is related to a rule generated by a data packet; or
- the second number is indicated by third information, wherein the first information includes the third information.

In some embodiments, the second number is defined by the communication protocol. For example, the second information occupies one bit, and the communication protocol defines the second number to be 139.

In some embodiments, the second number is configured by the network device. For example, the network device configures the second number to be 128.

In some embodiments, the second number is related to the largest number of bits of the control information carried by the first information format. For example, the second number = the full bit length of the first information - the largest number. As another example, the second number < the full bit length of the first information - the largest number, and the second number is a power of 2.

In some embodiments, the second number is related to the bit length supported by the encoder. For example, the second number is less than or equal to the bit length supported by the encoder.

In some embodiments, the second number is related to the rule generated by the data packet. For example, the rule generated by the data packet requires the data packet to be an integer multiple of 8, and then the second number also needs to be an integer multiple of 8.

In some embodiments, the network device configures the second number to the terminal in advance via configuration signaling. The configuration signaling may be at least one of: radio resource control (RRC) signaling, a medium access control (MAC) control element (MAC CE), or DCI. In some embodiments, the second number is indicated by the third information, wherein the third information is carried by the first information. For example, the third information occupies three bits, and the three bits may represent eight code points. Each code point corresponds to a second number. In some embodiments, the number of bits occupied by the third information is defined by the communication protocol or a fixed value configured by the network; and the number of bits occupied by the third information may be considered to be a part or a separate part of the second number.

### The third number:

The third number is the number of bits of the placeholder. In some embodiments, the third number is the number of placeholder bits in a case where the first information is carrying the data information. In some embodiments, the third number is related to the second number. In some embodiments, the third number is related to the second number and the full bit length of the first information.

For example, the third number = the full bit length of the first information - the second number - the number of bits of the second information. For another example, the third number = a second threshold - the second number - the number of bits of the second information, wherein the second threshold is determined based on other possible conditions, and the second threshold is less than or equal to the full bit length of the first information.

### The fourth number:

The fourth number is the number of bits occupied by the control information. In some embodiments, the control information is used to configure a terminal-specific parameter. In some embodiments, the control information is used to indicate related information of the data information. The related information of the data information includes at least one of: the second number, a priority level of the data information, redundant version information, new data indication information, HARQ process information, or feedback scheme information. In some embodiments, in a case where the control information is used to indicate the related information of the data information, the control information is considered to be part of the data information to distinguish the control information used to indicate a second channel.

In some embodiments, the control information is used to indicate the related information of the second channel.

In some embodiments, the control information is used to configure the related information of between the terminal-specific parameter and the data information.

In some embodiments, the fourth number satisfies at least one of the following conditions:
- the fourth number is defined by a communication protocol;
- the fourth number is configured by a network device;
- the fourth number is related to a largest number of bits of the control information carried by the first information format;
- the fourth number is related to a bit length supported by the encoder; or
- the fourth number is related to a second number.

In some embodiments, the fourth number is defined by the communication protocol. For example, the communication protocol defines the fourth number to be 20.

In some embodiments, the fourth number is configured by the network device. For example, the network device configures the fourth number to be 30.

In some embodiments, the fourth number is related to the largest number of bits of the control information carried by the first information format. For example, the fourth number is less than or equal to the largest number.

In some embodiments, the fourth number is related to the bit length supported by the encoder. For example, the fourth number is less than or equal to the bit length supported by the encoder. For another example, the fourth number is less than or equal to (the full bit length of the first information - the bit length supported by the encoder).

In some embodiments, the fourth number is related to the second number. For example, the fourth number is less than or equal to (the full bit length of the first information - the second number - the number of bits of the second information).

### The fifth number:

The fifth number is the number of bits of the placeholder. In some embodiments, the fifth number is the number of placeholder bits in a case where the first information carries the data information and the control information. In some embodiments, the fifth number is related to the second number. In some embodiments, the fifth number is related to the fourth number. In some embodiments, the fifth number is related to both the second number and the fourth number. In some embodiments, the fifth number is related to the second number and the full bit length of the first information.

For example, the fifth number = the full bit length of the first information - the second number - the fourth number - the number of bits of the second information. For another example, the fifth number = a third threshold - the second number - the fourth number - the number of bits of the second information, wherein the third threshold is determined based on other possible conditions, and the third threshold is less than or equal to the full bit length of the first information.

### The second information is represented by more than one bit:

In some embodiments, the second information is represented by N bits, wherein N is an integer greater than 1. The second information is used to indicate one of a plurality of content combinations for the first information format. Optionally, the N bits may represent 2^{N} number of code points, and each code point is used to indicate the one of the plurality of content combinations for the first information format.

A mapping between the N bits and the plurality of content combinations is predefined by the communication protocol, or preconfigured by the network device. That is, each mapping between a plurality of code points and the plurality of content combinations is predefined by the communication protocol, or preconfigured by the network device.

Information content or an information content combination varies across different ones of the plurality of content combinations.

Each content combination is a combination of at least one piece of information content. In a case where each piece of information content corresponds to one information field, the content combination may be understood as the combination of the at least one piece of information content, wherein each information field occupies one or more bits.

That the information content varies across different ones of the plurality of content combinations may be understood as follows: Different content combinations include different information fields; or include the same information fields generated via different generation schemes; or include the same information fields with different bit sizes; or include the same information fields generated via different schemes, and with different bit sizes.

The different information content combinations may be distinguished based on least one of a plurality of dimensions of the information content: a type, a volume, a bit length, a function, and the like.

In some embodiments, the information content of the plurality of information content combinations includes: first data information and second data information.

The first data information and the second information data differ in at least one of: a data volume; a type of service; a priority level; or a feedback scheme regarding transmission success. For example, the feedback scheme is a hybrid automatic repeat request-ACK (HARQ-ACK) feedback scheme. In some embodiments, there are more than three types of different data information.

That the information content of the plurality of different content combinations includes the first data information and the second data information may be understood as follows: A first content combination contains the first data information, a second content combination contains the second data information, or a third content combination contains the first data information and the second data information.

In some embodiments, the information content of the plurality of different content combinations contains: first control information and second control information;

The first control information and the second control information differ in at least one of: a purpose; or an information field.

In some embodiments, the control information of different purposes includes at least two of: control information A, control information B, control information C, or control information D.

The control information A is used in the control information of uplink scheduling.

The control information B is used in the control information of downlink scheduling.

The control information C is used in the control information for configuring a terminal-specific parameter.

The control information D is used in the control information of sidelink scheduling.

In a case where sub-control information in some control information in different control information are one or a plurality, each control information may be understood as each control information combination. In some embodiments, at least two control information combinations are used for the uplink scheduling. For example, a control information combination 1 used for the uplink scheduling, a control information combination 2 used for the uplink scheduling, and the like. In some embodiments, at least two information combinations are used for the downlink scheduling. For example, a control information combination 1 used for the downlink scheduling, a control information combination 2 used for the downlink scheduling, and the like. In some embodiments, at least two information combinations are used for the sidelink scheduling. For example, a control information combination 1 used for the sidelink scheduling, a control information combination 2 used for the sidelink scheduling, and the like. In some embodiments, at least two information combinations are used for configuring the terminal-specific parameter. For example, a control information combination 1 used for configuring the terminal-specific parameter, a control information combination 2 used for configuring the terminal-specific parameter, and the like.

The following examples are provided for illustrative purposes only and do not cover all possible combinations.

In some embodiments, each content combination includes: the data information and/or the control information. Considering a case where the second information is represented by two bits, Table 1 illustrates a possible mapping between the code points and the content combinations.

**Table 1**

| N=2 bits | Other bits (M bits) |
|---|---|
| 00 | Data information |
| 01 | Data information + Control information |
| 10 | Control information |

It should be noted that, the related information of the data information may be considered as a part of the data information. In some embodiments, the related information of the data information is empty, the data information corresponding to 00 is A bits of downlink data, such as 140 bits; In some embodiments, the related information of the data information is not empty, the data information corresponding to 00 includes B bits of new data indication information, C bits of redundant version information, D bits of an HARQ process ID, and (A-(B+C+D)) bits of downlink data, such as B=1, C=2, D=3, and A=140.

In embodiments, each content combination includes one of: the data information, a first control information combination, a second control information combination, or a third control information combination. Considering a case where the second information is represented using two bits, Table 2 illustrates a possible mapping between the code points and the content combinations.

**Table 2**

| N=2 bits | Other bits (M bits) |
|---|---|
| 00 | Data information |
| 01 | First control information combination (uplink scheduling) |
| 10 | Second control information combination (downlink scheduling) |
| 11 | Third control information combination (UE-specific parameter) |

In embodiments, each content combination includes at least one of: the first data information, the second data information, the third data information, a first control signaling combination, or a second control signaling combination. Considering a case where the second information is represented using two bits, Table 3 illustrates a possible mapping between the code points and the content combinations.

**Table 3**

| N=2 bits | Other bits (M bits) |
|---|---|
| 00 | First data information |
| 01 | Second data information |
| 10 | Third data information and first control information combination |
| 11 | Second control information combination |

In some embodiments, each content combination includes at least one of: the first data information, the second data information, the first control signaling combination, the second control signaling combination, a third control signaling combination, or a fourth control signaling combination. Considering a case where the second information is represented using three bits, Table 4 illustrates a possible mapping between the code points and the content combinations.

**Table 4**

| N=3 bits | Other bits (M bits) |
|---|---|
| 000 | First data information |
| 001 | Second data information |
| 010 | First control information combination |
| 011 | Second control information combination |
| 100 | Third control information combination |
| 101 | Fourth control information combination |
| 110 | First data information + Second control information combination |
| 111 | Second data information + Second control information combination |

It should be noted that a value of the code point listed above is provided for illustrative purposes only. In different embodiments, the mapping between the code points and the content combinations may be modified. Each row in each of the above tables may be implemented independently as a separate embodiment, a subset of rows within each above table may be implemented independently as a new embodiment, and a subset of rows from different tables may be recombined to form a new embodiment.

In summary, the method embodiments involving using the second information to indicate the information content carried by the first information format result in minimal overhead and enable flexible indication, thereby facilitating the first information format in flexibly carrying the data information and/or control information.

**Optional implementation 2 (implicitly indicating whether the data information is carried):**
The first information of the first information format adopts a scramble sequence to scramble information, wherein the scramble sequence is used to indicate that the first information carries at least one of the data information or the control information. In some embodiments, the scramble sequence is a radio-network temporary identifier (RNTI) of a terminal device.

In some embodiments, the terminal determines that the first information carries at least one of the data information or the control information based on an indication result of the scramble sequence.

Candidate scramble sequences may be two or more. The following are described separately.

**Candidate scramble sequences consist of two scramble sequences:**
In some embodiments, the candidate scramble sequences include a first scramble sequence and a second scramble sequence. In a case where the first information adopts the first scramble sequence to scramble information, the other bits of the first information carry the data information; in a case where the first information adopts the second scramble sequence to scramble information, the other bits of the first information do not carry the data information.

In a scenario where the first information (or the other bits of the first information) carries the data information, the first information includes at least one of:
- data information of a second number of bits;
- data information of a second number of bits, and placeholder information of a third number of bits;
- data information of a second number of bits, and control information of a fourth number of bits; or
- data information of a second number of bits, control information of a fourth number of bits, and placeholder information of a fifth number of bits.
The second number, the third number, the fourth number, and the fifth number are all integers.

### The second number:

The second number is the number of bits that the data information occupies. In some embodiments, the second number satisfies at least one of the following conditions:
- the second number is defined by a communication protocol;
- the second number is configured by a network device;
- the second number is related to the largest number of bits of the control information carried by the first information;
- the second number is related to a bit length supported by an encoder;
- the second number is related to a rule generated by a data packet; or
- the second number is indicated by third information, wherein the first information includes the third information.

In some embodiments, the second number is defined by the communication protocol. For example, the communication protocol defines the second number to be 140.

In some embodiments, the second number is configured by the network device. For example, the network device configures the second number to be 128.

In some embodiments, the second number is related to the largest number of bits of the control information carried by the first information format. For example, the second number = the full bit length of the first information - the largest number; for another example, the second number < the full bit length of the first information - the largest number, and the second number is a power of 2.

In some embodiments, the second number is related to the bit length supported by the encoder. For example, the second number is less than or equal to the bit length supported by the encoder.

In some embodiments, the second number is related to the rule generated by the data packet. For example, the rule generated by the data packet requires the data packet to be an integer multiple of 8; as a result, the second number also needs to be an integer multiple of 8.

In some embodiments, the network device configures the second number of bits to the terminal in advance over a configuration signaling. The configuration signaling may be at least one of: RRC signaling, a MAC CE, or DCI.

In some embodiments, the second number is indicated by the third information, wherein the third information is carried by the first information. For example, the third information occupies three bits, and the three bits may represent eight code points. Each code point corresponds to the second number.

### The third number:

The third number is the number of bits of the placeholder. In some embodiments, the third number is the number of placeholder bits in a case where the first information is carrying the data information. In some embodiments, the third number is related to the second number. In some embodiments, the third number is related to the second number and the full bit length of the first information.

For example, the third number = the full bit length of the first information - the second number - the number of bits of the second information. For another example, the third number = a second threshold - the second number - the number of bits of the second information, wherein the second threshold is determined based on other possible conditions, and the second threshold is less than or equal to the full bit length of the first information.

### The fourth number:

The fourth number is the number of bits occupied by the control information. In some embodiments, the control information is used to configure a terminal-specific parameter. In some embodiments, the control information is used to related information of the data information. The related information of the data information includes at least one of: the second number, a priority level of the data information, redundant version information, new data indication information, HARQ process information, or feedback scheme information.

In some embodiments, the control information is used to indicate the terminal-specific parameter and the related information of the data information.

In some embodiments, the fourth number satisfies at least one of the following conditions:
- the fourth number is defined by a communication protocol;
- the fourth number is configured by a network device;
- the fourth number is related to a largest number of bits of the control information carried by the first information format;
- the fourth number is related to a bit length supported by the encoder; or
- the fourth number is related to a second number.

In some embodiments, the fourth number is defined by the communication protocol. For example, the communication protocol defines the fourth number to be 20.

In some embodiments, the fourth number is configured by the network device. For example, the network device configures the fourth number to be 30.

In some embodiments, the fourth number is related to the largest number of bits of the control information carried by the first information format. For example, the fourth number is less than or equal to the largest number of bits of the control information.

In some embodiments, the fourth number is related to the bit length supported by the encoder. For example, the fourth number is less than or equal to the bit length supported by encoder. For another example, the fourth number is less than or equal to (the full bit length of the first information - the bit length supported by the encoder).

In some embodiments, the fourth number is related to the second number. For example, the fourth number is less than or equal to (the full bit length of the first information - the second number - the number of bits of the second information).

### The fifth number:

The fifth number is the number of bits of the placeholder. In some embodiments, the fifth number is a number of placeholder bits in a case where the first information is carrying the data information and the control information. In some embodiments, the fifth number is related to the second number. In some embodiments, the fifth number is related to the fourth number. In some embodiments, the fifth number is related to both the second number and the fourth number. In some embodiments, the fifth number is related to the second number and the full bit length of the first information.

For example, the fifth number = the full bit length of the first information - the second number - the fourth number - the number of bits of the second information. For another example, the fifth number = a third threshold - the second number - the fourth number - the number of bits of the second information, wherein the third threshold is determined based on other possible conditions, and the third threshold is less than or equal to the full bit length of the first information.

**Candidate scramble sequences consist of three or more scramble sequences:**
In some embodiments, candidate scramble sequences consist of at least three scramble sequences. Each scramble sequence is used to indicate one of a plurality of content information combinations for the first information format.

A mapping between a plurality of scramble sequences and the plurality of content combinations is predefined by the communication protocol, or preconfigured by the network device.

Information content or an information content combination varies across different ones of the plurality of content combinations.

Each content combination is a combination of at least one piece of information content. In a case where each piece of information content corresponds to one information field, the content combination may be understood as the combination of the at least one piece of information content, wherein each information field occupies one or more bits.

That the information content varies across different ones of the plurality of content combinations may be understood as follows: Different content combinations include different information fields; or include the same information fields generated via different generation schemes; or include the same information fields with different bit sizes; or include the same information fields generated via different schemes, and with different bit sizes.

The different information content combinations may be distinguished based on least one of a plurality of dimensions of the information content: a type, a volume, a bit length, a function, and the like.

In some embodiments, the information content of the plurality of information content combinations includes: first data information and second data information.

The first data information and the second information differ in at least one of: a data volume; a type of service; a priority level; or a feedback scheme regarding transmission success. For example, the feedback scheme is an HARQ-ACK feedback scheme. In some embodiments, there are more than three types of different data information.

That the information content of the plurality of different content combinations contains the first data information and the second data information may be understood as follows: A first content combination contains the first data information, a second content combination contains the second data information, or a third content combination contains the first data information and the second data information.

In some embodiments, the information content of the plurality of different content combinations contains: first control information and second control information.

The first control information and the second control information differ in at least one of: a purpose; or an information field.

In some embodiments, the control information of different purposes includes at least two of: control information A, control information B, control information C, and control information D.

The control information A is used in the control information of uplink scheduling.

The control information B is used in the control information of downlink scheduling.

The control information C is used in the control information for configuring a terminal-specific parameter.

The control information D is used in the control information of sidelink scheduling.

In a case where pieces of sub-control information in some control information in different control information are one or a plurality, each control information may be understood as each control information combination. In some embodiment, at least two control information combinations are used for the uplink scheduling. For example, a control information combination 1 used for the uplink scheduling, a control information combination 2 used for the uplink scheduling, and the like. In some embodiments, at least two information combinations are used for the downlink scheduling. For example, a control information combination 1 used for the downlink scheduling, a control information combination 2 used for the downlink scheduling, and the like. In some embodiments, at least two information combinations are used for the sidelink scheduling. For example, a control information combination 1 used for the sidelink scheduling, a control information combination 2 used for the sidelink scheduling, and the like. In some embodiments, at least two information combinations are used for configuring the terminal-specific parameter. For example, a control information combination 1 used for configuring the terminal-specific parameter, a control information combination 2 used for configuring the terminal-specific parameter, and the like.

The following examples are provided for illustrative purposes only and do not cover all possible combinations.

In some embodiments, each content combination includes the data information and/or the control information. Considering a case where the candidate scramble sequences are represented by three scramble sequences, Table 5 illustrates a possible mapping between the code points and the content combinations.

**Table 5**

| Scramble sequence | First information |
|---|---|
| RNTI 1 | Data information |
| RNT1 2 | Data information + Control information |
| RNTI 3 | Control information |

It should be noted that, the related information of the data information may be considered as a part of the data information. In some embodiments, the related information of the data information is empty, the data information corresponding to 00 is A bits of downlink data, such as 140 bits; in some embodiments, the related information of the data information is not empty, the data information corresponding to 00 includes B bits of new data indication information, C bits of redundant version information, D bits of an HARQ process ID, and (A-(B+C+D)) bits of downlink data, such as B=1, C=2, D=3, and A=140.

In embodiments, each content combination includes one of: the data information, a first control information combination, a second control information combination, or a third control information combination. Considering a case where the scramble sequence is represented using two bits, Table 6 illustrates a possible mapping between the scramble sequences and the content combinations.

**Table 6**

| Scramble sequence | First information |
|---|---|
| RNTI 1 | Data information |
| RNTI 2 | First control information combination (uplink scheduling) |
| RNTI 3 | Second control information combination (downlink scheduling) |
| RNTI 4 | Third control information combination (UE-specific parameter) |

In embodiments, each content combination includes at least one of: the first data information, the second data information, the third data information, a first control signaling combination, or a second control signaling combination. Considering a case where the scramble sequence is represented using two bits, Table 7 illustrates a possible mapping between the scramble sequences and the content combinations.

**Table 7**

| Scramble sequence | First information |
|---|---|
| RNTI 1 | First data information |
| RNTI 2 | Second data information |
| RNTI 3 | Third data information and first control information combination |
| RNTI 4 | Second control information combination |

In some embodiments, each content combination includes at least one of: the first data information, the second data information, the first control signaling combination, the second control signaling combination, a third control signaling combination, a fourth control signaling combination. Considering a case where the scramble sequence is represented using three bits, Table 8 illustrates a possible mapping between the scramble sequences and the content combinations.

**Table 8**

| Scramble sequence | First information |
|---|---|
| RNTI 1 | First data information |
| RNTI 2 | Second data information |
| RNTI 3 | First control information combination |
| RNTI 4 | Second control information combination |
| RNTI 5 | Third control information combination |
| RNTI 6 | Fourth control information combination |
| RNTI 7 | First data information + Second control information combination |
| RNTI 8 | Second data information + Second control information combination |

It should be noted that names of the scramble sequence listed above are provided for illustrative purposes only. In different embodiments, the mapping between the scramble sequences and the content combinations may be modified. Each row in each of the above tables may be implemented independently as a separate embodiment, a subset of rows within each above table may be implemented independently as a new embodiment, and a subset of rows from different tables may be recombined to form a new embodiment.

In summary, the method embodiments involving indicating, using the scramble sequence, the information content carried by the first information format result in minimal overhead and enable flexible indication, thereby facilitating the first information format in flexibly carrying the data information and/or the control information.

**Regarding the design 2 of the embodiments: the first information format is used for transmitting the data information/data information + control information, and the second information format is used for transmitting the control information.**

The terminal detects at least one information format in a first channel, wherein the at least one information format includes the first information format and a second information format. The first information format is at least configured to support the data information. The second information format is configured to support the control information. That the first information format is at least configured to support the data information may be understood as the first information format is at least configured to support the information, or the first information format is configured to support the data information or the control information. It should be noted that the control information carried by the first information format and the second information format may or may not be different; in most cases the control information varies.

In some embodiments, the first information format includes:

The first information includes at least one of:
- data information of a second number of bits;
- data information of a second number of bits, and placeholder information of a third number of bits;
- data information of a second number of bits, and the control information of a fourth number of bits; or
- data information of a second number of bits, the control information of a fourth number of bits, and placeholder information of a fifth number of bits.
The second number, the third number, the fourth number, and the fifth number are all integers.

### The second number:

The second number is the number of bits that the data information occupies. In some embodiments, the second number satisfies at least one of the following conditions:
- the second number is defined by a communication protocol;
- the second number is configured by a network device;
- the second number is related to the largest number of bits of the control information carried by the first information;
- the second number is related to a bit length supported by an encoder;
- the second number is related to a rule generated by a data packet; or
- the second number is indicated by third information, wherein the first information includes the third information.

In some embodiments, the second number is defined by the communication protocol. For example, the second information occupies one bit, and the communication protocol defines the second number to be 139.

In some embodiments, the second number is configured by the network device. For example, the network device configures the second number to be 128.

In some embodiments, the second number is related to the largest number of bits of the control information carried by the first information format. For example, the second number = the full bit length of the first information - the largest number; for another example, the second number < the full bit length of the first information - the largest number, and the second number is a power of 2.

In some embodiments, the second number is related to the bit length supported by the encoder. For example, the second number is less than or equal to the bit length supported by the encoder.

In some embodiments, the second number is related to the rule generated by the data packet. For example, the rule generated by the data packet requires the data packet to be an integer multiple of 8; as a result, the second number also needs to be an integer multiple of 8.

In some embodiments, the network device configures the second number to the terminal in advance over a configuration signaling. The configuration signaling may be at least one of: RRC signaling, a MAC CE, or DCI.

In some embodiments, the second number is indicated by the third information, wherein the third information is carried by the first information. For example, the third information occupies three bits, and the three bits may represent eight code points. Each code point corresponds to the second number.

### The third number:

The third number is the number of bits of the placeholder. In some embodiments, the third number is a number of placeholder bits in a case where the first information is carrying the data information. In some embodiments, the third number is related to the second number. In some embodiments, the third number is related to the second number and the full bit length of the first information.

For example, the third number = the full bit length of the first information - the second number - the number of bits of the second information. For another example, the third number = a second threshold - the second number - the number of bits of the second information, wherein the second threshold is determined based on other possible conditions, and the second threshold is less than or equal to the full bit length of the first information.

### The fourth number:

The fourth number is the number of bits occupied by the control information. In some embodiments, the control information is used to configure a terminal-specific parameter. In some embodiments, the control information is used to indicate related information of the data information. The related information of the data information includes at least one of: the second number, a priority level of the data information, redundant version information, new data indication information, HARQ process information, or feedback scheme information. In some embodiments, in a case where the control information is used to indicate the related information of the data information, the control information is considered to be part of the data information to distinguish the control information used to indicate a second channel.

In some embodiments, the control information is used to indicate the terminal-specific parameter and the related information of the data information.

In some embodiments, the fourth number satisfies at least one of the following conditions:
- the fourth number is defined by a communication protocol;
- the fourth number is configured by a network device;
- the fourth number is related to a largest number of bits of the control information carried by the first information format;
- the fourth number is related to a bit length supported by the encoder; or
- the fourth number is related to a second number.

In some embodiments, the fourth number is defined by the communication protocol. For example, the communication protocol defines the fourth number to be 20.

In some embodiments, the fourth number is configured by the network device. For example, the network device configures the fourth number to be 30.

In some embodiments, the fourth number is related to the largest number of bits of the control information carried by the first information format. For example, the fourth number is less than or equal to the largest number of bits of the control information.

In some embodiments, the fourth number is related to the bit length supported by the encoder. For example, the fourth number is less than or equal to the bit length supported by the encoder. For another example, the fourth number is less than or equal to (the full bit length of the first information - the bit length supported by the encoder).

In some embodiments, the fourth number is related to the second number. For example, the fourth number is less than or equal to (the full bit length of the first information - the second number).

### The fifth number:

The fifth number is the number of bits of the placeholder. In some embodiments, the fifth number is a number of placeholder bits in a case where the first information is carrying the data information and the control information. In some embodiments, the fifth information is related to the second number of bits. In some embodiments, the fifth number is related to the fourth number. In some embodiments, the fifth number is related to the both the second number and the fourth number. In some embodiments, the fifth number is related to the second number and the full bit length of the first information.

For example, the fifth number = the full bit length of the first information - the second number - the fourth number - the number of bits of the second information. For another example, the fifth number = a third threshold - the second number - the fourth number - the number of bits of the second information, wherein the third threshold is determined based on other possible conditions, and the third threshold is less than or equal to the full bit length of the first information.

In some embodiments, the second information format and the first information format differ in at least one of:
- a payload size;
- a coding scheme; or
- a transmission resource.

In some embodiments, the payload sizes of the first information format and the second information format are different. For example, the payload size of the first information format is 140 bits, whereas the payload size of the second information format is 40 bits. In some embodiments, the payload size of the first information format is defined by the communication protocol or preconfigured by the network device. In some embodiments, the payload size of the second information format is defined by the communication protocol or preconfigured by the network device.

In some embodiments, the first information format and the second information format use the same encoding scheme, such as a polar encoding. In some embodiments, the first information format and the second information format use different encoding schemes. For example, the first information format uses a low-density parity check code (LDPC) encoding; whereas the second information format uses a polar encoding.

In some embodiments, the transmission resource occupied by the information of the first information format and the information of the second information format are different. For example, the information of the first information format uses a search space 1, whereas the information of the second information format uses a search space 2. For another example, the information of the first information format uses a first group of candidate PDCCHs, whereas the information of the second information format uses a second group of candidate PDCCHs. For another example, the information of the first information format uses a first CORESET, whereas the information of the second information format uses a second CORESET.

In some embodiments, the redundant version information corresponding to the data information carried by the first information format is:
defined by a communication protocol; or
configured by a network device; or
indicated by fourth information, wherein the first information includes the four information.

In a case where the redundant version information corresponding to the data information is defined by the communication protocol or configured by the network device, for example, a redundant version 0 is constantly used, or a redundant version 0 is used for an initial transmission, and a redundant version 2 is used for retransmissions, the first information does not need to carry the fourth information, thereby leaving more available bits to support the data information.

In some embodiments, the HARQ process information corresponding to the data information carried by the first information format is:
determined based on a physical resource occupied by the first information; or
indicated by fifth information, wherein the first information includes the fifth information in a case where the first information carries the data information.

Different HARQ processes may use different physical resources. For example, different HARQ processes use different numbering of a time-domain resource, or different HARQ processes use different frequency-resources, and the HARQ process information corresponding to the first information is determined based on the physical resource occupied by the first information. In this case, the first information does not need to carry the fifth information, thereby leaving more available bits to support the data information.

In some embodiments, the data information carried by the first information format does not support HARQ retransmission. In some embodiments, the data information carried by the first information does not support HARQ-ACK feedback. This is because retransmissions cannot meet the highly stringent latency requirements for some services.

In an exemplary embodiment, the first information format includes A bits of downlink data, for example, A is 140 bits; in another exemplary embodiment, the first information format includes B bits of new data indication information, C bits of redundant version information, D bits of an HARQ process ID, and (A-(B+C+D)) bits of downlink data, for example, B=1, C=2, D= , and A=140.

In the embodiments of the present disclosure, the first channel is a downlink control channel, and the first information format is a first downlink control signaling format; or the first channel is a sidelink control channel, and the first information format is a first sidelink control signaling format.

FIG. 6 is a block diagram of a transmission apparatus according to some embodiments of the present disclosure. The apparatus may be implemented as a terminal via software or hardware or a combination of both, or the apparatus may be implemented as part of a terminal. The apparatus includes a receiving module 620.

The receiving module 620 is configured to detect at least one information format in a first channel. The at least one information format include a first information format, wherein the first information format supports carrying data information;

The first channel supports carrying control information. In some embodiments, the first channel is a control channel. Exemplarily, in the downlink transmission scenario, the first channel is the PDCCH; and in the sidelink transmission scenario, the first channel is a PSCCH. In the embodiments of the present disclosure, the first channel is considered as the PDCCH.

The terminal detects at least one information format in a first channel, wherein the information format is the information format of the first information. In some embodiments, the information format is the information format of the control signaling. The information format of the control signaling may be of one or several types. Optionally, the different information formats correspond to different payload sizes. Optionally, the different information formats correspond to different aggregation levels.

Exemplarily, in the downlink transmission scenario, the information format is a DCI format, and one or several types of DCI formats may be present; and in the sidelink transmission scenario, the information format is an SCI format, and one or several types of SCI formats may be present.

In the embodiments of the present disclosure, the at least one information format includes the first information format, wherein the first information format supports carrying data information. This support for carrying data information may adopt one of the following two designs:

Design 1: The same information formats are used for dynamically transmitting the data information and the control information.

The first information format supports carrying at least one of the data information or the control information. Based on transmission requirements of the service, the first information of the first information format may be dynamically configured for transmitting one of:
- data information;
- data information and control information; or
- control information;

Design 2: Different information formats are separately used for transmitting the data information and the control information.

For example, the first information format is used for transmitting the data information, and a second information format is used for transmitting the control information.

That the terminal detects at least one information format on the first channel may be understood as follows: The terminal blind detects at least one information format on the first channel. In some embodiments, the terminal is configured with several first channel candidates, and the terminal performs blind detection on each of the several first channel candidates for a presence of the first information of the first information format. Alternatively, this may be understood as follows: The terminal performs blind detection according to at least one piece of information on the first channel.

In a case where the first information of the first information format is detected on some first channel candidate, the terminal uses a scramble sequence corresponding to itself to descramble the first information; in a case where descrambling is successful, the terminal acquires information content carried by the first information; in a case where descrambling fails, the terminal discards the first information. Exemplarily, the scramble sequence is an RNTI for the terminal, and the same terminal may possess one or several RNTIs.

In some embodiments, a search space corresponding to the several first channel candidates on which blind detection is performed, is determined based on a search space set and a CORESET.

In some embodiments, the apparatus further includes a processing module 640. The processing module 640 is configured to acquire the data information from the first information in a case where the first information of the first information format is detected.

Regarding a format design of the first information format, reference may be made to sections relevant to "**regarding design 1 in the above embodiments: the first information is used for dynamically transmitting the data information and the control information**," and/or "**regarding the design 2 of the embodiments: the first information format is used for transmitting the data information/data information + control information, and the second information format is used for transmitting the control information,**" which is not elaborated herein.

In summary, by carrying, using the first information format, the data information on the first channel which is a channel that supports carrying the control information, the method according to the embodiments of the present disclosure simplifies the two-step transmission scheme of "DCI scheduling first, then transmission second" in the related art into a one-step transmission scheme. For example, in a case where the information of the first information format is the DCI, the downlink data may be directly transmitted using the DCI, such that transmission latency is reduced, and thus the requirements of the URLLC service are satisfied.

FIG. 7 is a block diagram of a transmission apparatus according to some embodiments of the present disclosure. The apparatus may be implemented as a terminal via software or hardware or a combination of both, or the apparatus may be implemented as part of a terminal. The apparatus includes a transmitting module 720.

The transmitting module 720 is configured to transmit first information of a first information format on a first channel, wherein the first information format supports carrying data information.

The first channel supports carrying control information. In some embodiments, the first channel is a control channel. Exemplarily, in the downlink transmission scenario, the first channel is the PDCCH; and in the sidelink transmission scenario, the first channel is a PSCCH. In the embodiments of the present disclosure, the first channel is considered as the PDCCH.

The network device transmits information of the first information format on the first channel, wherein the first information format is one of at least one information formats. In some embodiments, the information format is the information format of the control signaling. The information format of the control signaling may be of one or several types. Optionally, the different information formats correspond to different payload sizes. Optionally, the different information formats correspond to different aggregation levels.

Exemplarily, in the downlink transmission scenario, the information format is a DCI format, and one or several types of DCI formats may be present; and in the sidelink transmission scenario, the information format is an SCI format, and one or several types of SCI formats may be present.

In the embodiments of the present disclosure, the at least one information format includes the first information format, wherein the first information format supports carrying data information. This support for carrying data information may adopt one of the following two designs:

Design 1: The same information formats are used for dynamically transmitting the data information and the control information.

The first information format supports carrying at least one of the data information or the control information. Based on transmission requirements of the service, the first information of the first information format may be dynamically configured to transmit one of:
- data information;
- data information and control information; or
- control information.

Design 2: Different information formats are separately used to transmit the data information and the control information.

For example, the first information format is used for transmitting the data information, and a second information format is used for transmitting the control information.

That the network device transmits the first information of the first information format on the first channel may be understood as follows: The network device transmits information of at least one information format on several first channel candidates, and at least one piece of first information of the first information format is present on each of the several first channel candidates transmitting the information of one information format.

In some embodiments, a search space corresponding to the several first channel candidates on which blind detection is performed is determined based on a search space set and a CORESET.

Regarding a format design of the first information format, reference may be made to sections relevant to "**regarding design 1 in the above embodiments: the first information is used for dynamically transmitting the data information and the control information,**" and/or "**regarding the design 2 of the embodiments: the first information format is used for transmitting the data information/data information + control information, and the second information format is used for transmitting the control information,**" which is not elaborated herein.

In some embodiments, the apparatus further includes a processing module 740. The processing module 740 is configured to generate the first information of the first information format.

In summary, by carrying, using the first information format, the data information on the first channel which is a channel that supports carrying the control information, the method according to the embodiments of the present disclosure simplifies the two-step transmission scheme of "DCI scheduling first, then data transmission" in the related art into a one-step transmission scheme. For example, in a case where the information of the first information format is the DCI, the downlink data may be directly transmitted using the DCI, such that transmission latency is reduced, and thus the requirements of the URLLC service are satisfied.

It should be further noted that the apparatus according to the above embodiments is only described by way of example in terms of the definition of functional modules when implementing its functions. In practice, the functions may be assigned to be completed by different functional modules as needed. That is, the device or apparatus may be designed to have different functional modules to implement part or all of the functions as described above.

Regarding the apparatus described in the above embodiments, the specific details regarding each module performing operations have been given in detail in the above method embodiments of the present disclosure, which are not elaborated herein.

FIG. 8 is a block diagram of a communication device (a terminal or a network device) according to some embodiments of the present disclosure. The communication device 800 includes a processor 801, a receiver 802, a transmitter 803, a memory 804, and a bus 805.

The processor 801 includes one or more processing cores, and the processor 801 executes various functional applications and information processing by running software programs and modules. In some embodiments, the processor 801 may be configured to implement the functions and steps of the processing module 640 or the processing module 740.

The receiver 802 and the transmitter 803 may be implemented as one communication component, wherein the communication component may be a communication chip. In some embodiments, the receiver 802 may be configured to implement the functions and steps of the receiving module 620. In some embodiments, the transmitter may be configured to implement the functions and steps of the transmitting module 720.

The memory 804 is communicably connected to the processor 801 over the bus 805. The memory 804 is configured to store one or more computer programs, wherein the processor 801 is configured to call and run the one or more computer programs to perform each in the method embodiments of the present disclosure.

Additionally, the memory 804 may be implemented by any type of transitory or non-transitory storage device or a combination thereof, and the transitory or non-transitory storage device includes but is not limited to: a disk or an optical disc, an electrically erasable programmable read-only memory (EEPROM), an erasable programmable read-only memory (EPROM), a static random-access memory (SRAM), a read-only memory (ROM), a magnetic storage, a flash memory, a programmable read-only memory (PROM).

In some embodiments, the receiver 802 separately receives signals/data, or the processor 801 controls the receiver 802 to receive signals/data, or the processor 801 requests the receiver 802 to receive signals/data, or the processor 801 cooperates with the receiver 802 in receiving signals/or data.

In some embodiments, the transmitter 803 separately transmits signals/data, or the processor 801 controls the transmitter 803 to transmit signals/data, or the processor 801 requests the transmitter 803 to transmit signals/data, or the processor 801 cooperates with the transmitter 803 in transmitting signals/or data.

Some embodiments of the present disclosure further provide a computer-readable storage medium storing one or more computer programs, wherein the one or more programs are called and executed by the processor to implement each embodiment for the transmission method.

Some embodiments of the present disclosure further provide a chip. The chip includes programmable electric logic circuitry and/or one or more computer instructions, wherein the chip, when running on the communication device, implements each embodiment for the transmission method.

Some embodiments of the present disclosure further provide a computer program product, wherein the computer program product, when running, causes a computer device to perform the transmission method as described above.

Some embodiments of the present disclosure further provide a computer program. The computer program includes one or more computer instructions, wherein the one or more computer instructions are stored in the computer-readable storage medium. The one or more computer programs, when loaded and run by a processor, cause a computer device to perform the transmission method as described above.

Those skilled in the art should understand that in one or more of the above embodiments, the functions described in the embodiments of the present disclosure may be implemented in hardware, software, firmware, or any combination thereof. The functions, when implemented in software, may be stored in a computer-readable storage medium or transmitted as one or more instructions or codes on a computer-readable storage medium. The computer-readable storage medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements and the like, made within the spirit and principle of the present disclosure should fall within the protection scope of the present disclosure.

## Claims

1. A transmission method, performed by a terminal, the method comprising:
detecting at least one information format on a first channel, the at least one information format comprising a first information format;
wherein the first information format supports carrying data information, and the first channel supports carrying control information, the control information being used to indicate a second channel or a terminal-specific parameter.

2. The method according to claim 1, wherein the first information of the first information format comprises second information;
wherein the second information is used to indicate that the first information carries at least one of the data information or the control information.

3. The method according to claim 2, wherein
in a case where the first information format is configured to support carrying the data information, the second information is used to indicate that the first information carries the data information and/or the control information; or
in a case where the first information is not configured to support carrying the data information, the second information is used to indicate other information.

4. The method according to claim 1, wherein the first information of the first information format adopts a scramble sequence to scramble information;
wherein the scramble sequence is used to indicate that the first information carries at least one of the data information or the control information.

5. The method according to any one of claims 2 to 4, wherein
the first information carries the data information;
the first information contains data information comprising a second number of bits; or
the first information contains data information comprising a second number of bits, and placeholder information of a third number of bits; or
the first information contains data information comprising a second number of bits, and control information of the fourth number of bits; or
the first information contains data information comprising a second number of bits, control information of the fourth number of bits, and placeholder information of a fifth number of bits;
wherein the second number, the third number, the fourth number, and the fifth number are all integers.

6. The method according to claim 5, wherein the second number is:
defined by a communication protocol; or
configured by a network device; or
related to a largest number of bits of the control information carried by the first information format; or
related to a bit length supported by an encoder; or
related to a rule generated by a data packet; or
indicated by third information, wherein the first information comprises the third information.

7. The method according to claim 5, wherein the fourth number is:
defined by a communication protocol; or
configured by a network device; or
related to a largest number of bits of the control information carried by the first information format; or
related to a bit length supported by an encoder; or
related to a second number.

8. The method according to claim 5, wherein
the third number is related to the second number; or
the fifth number is related to the second number and the fourth number.

9. The method according to claim 1, wherein the first information of the first information format comprises second information;
wherein the second information is used to indicate one of a plurality of content combinations for the first information format; and information content or an information content combination varies across different ones of the plurality of content combinations.

10. The method according to claim 1, wherein the first information of the first information format adopts a scramble sequence to scramble information;
wherein the scramble sequence is used to indicate one of several content combinations for the first information; and information content or an information content combination varies across the different content combinations.

11. The method according to claim 9 or claim 10, wherein the information content of the plurality of content combinations comprises first data information and second data information;
wherein the first data information and the second data information differ in at least one of:
a data volume;
a service type;
a priority level; or
a feedback scheme regarding transmission success.

12. The method according to any one of claims 9 to 10, wherein the information content of the plurality of content combinations comprises first control information and second control information;
wherein the first control information and the second control information differ in at least one of:
a purpose; or
an information field.

13. The method according to claim 12, wherein the information field differs in at least one of:
a combination of the information field;
a volume of the information field;
a bit size of the information field; or
a generation scheme of the information field.

14. The method according to claim 1, wherein the at least one information format comprises a second information format;
wherein the first information format is at least configured to carry the data information, and the second information format is configured to carry the control information.

15. The method according to claim 14, wherein the second information format differs from the first information format in at least one of:
a payload size;
a coding scheme;
a transmission resource; or
a scramble sequence used.

16. The method according to any one of claims 1 to 15, wherein the payload size of the first information format is defined by a communication protocol or configured by a network device.

17. The method according to any one of claims 1 to 15, wherein the first information of the first information format carries the data information, and the data information corresponding to redundant version information is:
defined by a communication protocol; or
configured by a network device; or
indicated by fourth information, wherein the first information comprises the fourth information.

18. The method according to any one of claims 1 to 15, wherein the first information of the first information format carries the data information, the data information corresponding to hybrid automatic repeat request (HARQ) process information is:
determined based on a physical resource occupied by the first information; or
indicated by fifth information, wherein the first information comprises the fifth information.

19. The method according to any one of claims 1 to 15, wherein the data information does not support HARQ retransmission.

20. The method according to any one of claims 1 to 15, wherein the data information does not support HARQ-ACK feedback.

21. The method according to any one of claims 1 to 15, wherein
the first channel is a downlink control channel, and the first information is a first downlink instruction format; or
the first channel is a sidelink control channel, and the first information is a first sidelink instruction format.

22. A transmission method, performed by a network device, the method comprising:
transmitting first information of a first information format on a first channel;
wherein the first information format supports carrying data information, and the first channel supports carrying control information, the control information being used to indicate a second channel or a terminal-specific parameter.

23. The method according to claim 22, wherein the first information of the first information format comprises second information;
wherein the second information is used to indicate that the first information carries at least one of the data information or the control information.

24. The method according to claim 23, wherein
in a case where the first information format is configured to support carrying the data information, the second information is used to indicate that the first information carries the data information and/or the control information; or
in a case where the first information is not configured to support carrying the data information, the second information is used to indicate other information.

25. The method according to claim 22, wherein the first information of the first information format adopts a scramble sequence to scramble information;
wherein the scramble sequence is used to indicate that the first information carries at least one of the data information or the control information.

26. The method according to any one of claims 23 to 25, wherein
the first information carries the data information;
the first information contains data information comprising a second number of bits; or
the first information contains data information comprising a second number of bits, and placeholder information of a third number of bits; or
the first information contains data information comprising a second number of bits, and control information of the fourth number of bits; or
the first information contains data information comprising a second number of bits, control information of the fourth number of bits, and placeholder information of a fifth number of bits;
wherein the second number, the third number, the fourth number, and the fifth number are all integers.

27. The method according to claim 26, wherein the second number is:
defined by a communication protocol; or
configured by a network device; or
related to a largest number of bits of the control information carried by the first information format; or
related to a bit length supported by an encoder; or
related to a rule generated by a data packet; or
indicated by third information, wherein the first information comprises the third information.

28. The method according to claim 26, wherein the fourth number is:
defined by a communication protocol; or
configured by a network device; or
related to a largest number of bits of the control information carried by the first information format; or
related to a bit length supported by an encoder; or
related to a second number.

29. The method according to claim 26, wherein
the third number is related to the second number; or
the fifth number is related to the second number and the fourth number.

30. The method according to claim 22, wherein the first information of the first information format comprises second information;
wherein the second information is used to indicate one of a plurality of content combinations for the first information format, wherein information content or an information content combination varies across different ones of the plurality of content combinations.

31. The method according to claim 22, wherein the first information of the first information format adopts a scramble sequence to scramble information;
wherein the scramble sequence is used to indicate one of a plurality of content combinations for the first information, wherein information content or an information content combination varies across the different content combinations.

32. The method according to claim 30 or claim 31, wherein the information content of the plurality of content combinations comprises first data information and second data information;
wherein the first data information and the second data information differ in at least one of:
a data volume;
a service type;
a priority level; or
a feedback scheme regarding transmission success.

33. The method according to any one of claims 30 to 32, wherein the information content of the plurality of content combinations comprises first control information and second control information;
wherein the first control information and the second control information differ in at least one of:
a purpose; or
an information field.

34. The method according to any one of claims 30 to 32, wherein the information field differs in at least one of:
a combination of the information field;
a volume of the information field;
a bit size of the information field; or
a generation scheme of the information field.

35. The method according to claim 22, wherein the at least one information format comprises a second information format;
wherein the first information format is at least configured to carry the data information, and the second information format is configured to carry the control information.

36. The method according to claim 34, wherein the second information format differs from the first information format in at least one of:
a payload size;
a coding scheme;
a transmission resource; or

37. The method according to any one of claims 22 to 36, wherein the payload size of the first information format is defined by a communication protocol or configured by a network device.

38. The method according to any one claims 22 to 36, wherein the first information of the first information format carries the data information, and the data information corresponding to redundant version information is:
defined by a communication protocol; or
configured by a network device; or
indicated by fourth information, wherein the first information comprises the fourth information.

39. The method according to any one of claims 22 to 36, wherein the first information of the first information format carries the data information, the data information corresponding to hybrid automatic repeat request (HARQ) process information is:
determined based on a physical resource occupied by the first information; or
indicated by fifth information, wherein the first information comprises the fifth information.

40. The method according to any one of claims 22 to 36, wherein the data information does not support HARQ retransmission.

41. The method according to any one of claims 22 to 36, wherein the data information does not support HARQ-ACK feedback.

42. The method according to any one of claims 22 to 36, wherein
the first channel is a downlink control channel, and the first information is a first downlink instruction format; or
the first channel is a sidelink control channel, and the first information is a first sidelink instruction format.

43. A transmission apparatus, comprising:
a receiving module, configured to detect at least one information format on a first channel, the at least one information comprising a first information format;
wherein the first information format supports carrying data information, and the first channel supports carrying control information, the control information being used to indicate a second channel or parameters specific to the terminal device.

44. A transmission apparatus, comprising:
a transmission module, configured to transmit first information of a first information format on a first channel;
wherein the first information format supports carrying data information, and the first channel supports carrying control information, the control information being used to indicate a second channel or parameters specific to a terminal.

45. A terminal, comprising:
a processor;
a transceiver communicably connected to the processor; and
a memory storing instructions executable by the processor;
wherein the processor, when running, cause the terminal to perform the transmission method as described in any one of the claims 1 to 21.

46. A network device, comprising:
a processor;
a transceiver communicably connected to the processor; and
a memory storing instructions executable by the processor;
wherein the processor, when running, cause the terminal to perform the transmission method as described in any one of the claims 22 to 42.

47. A computer-readable storage medium storing one or more computer programs, wherein the one or more computer programs, when run by a processor, cause the processor to perform the transmission method as described in any one of the claims 1 to 42.

48. A chip, comprising: programmable electric logic circuitry and/or one or more programs, wherein the chip, when running, is configured to perform the transmission method as described in any one of the claims 1 to 42.

49. A computer program product, comprising: one or more computer instructions stored in a computer-readable storage medium, wherein the one or more computer instructions, when called and executed by a processor of a computer device, cause the computer device to perform the transmission method as described in any one of the claims 1 to 42.

50. A computer program, comprising: one or more computer instructions stored in a computer-readable storage medium, wherein the one or more computer instructions, when called and executed by a processor of a computer device, cause the computer device to perform the transmission method as defined in any one of the claims 1 to 42.
